# EUROPEAN PATENT SPECIFICATION

(11) **EP 0 833 741 B1**
(45) Date of publication and mention of the grant of the patent: **22.11.2000**
(21) Application number: 96916235.3
(22) Date of filing: 04.06.1996
(51) Int. Cl.: B29C 55/06, D02G 1/02, D02G 1/08, D01D 5/253

(54) **STRAND MATERIAL**
STRANGFÖRMIGES MATERIAL
MATIERE DE FIL

(30) Priority: 10.06.1995 GB 9511836; 20.09.1995 GB 9519182
(43) Date of publication of application: 08.04.1998
(73) Proprietor: J & P Coats, Limited, Glasgow G2 5PA (GB)
(72) Inventor: GAILEY, Robert, McNaught, Paisley, Renfrewshire PA1 3JX (GB); CURRAN, William, Wingate, Paisley, Renfrewshire PA2 6HL (GB); AITKEN, John, Paisley, Renfrewshire PA2 9LB (GB); GRAHAM, John, Elderslie, Renfrewshire PA5 9DD (GB)
(74) Representative: McNeight, David Leslie
(86) International application number: GB9601330
(87) International publication number: WO9641714

(56) References cited:
- EP-A- 0 432 272
- WO-A-93/11931
- WO-A-95/06558
- GB-A- 2 060 010
- US-A- 3 560 141
- US-A- 3 646 747
- US-A- 3 782 088
- PATENT ABSTRACTS OF JAPAN vol. 016, no. 269 (C-0952), 17 June 1992 & JP,A,04 065544 (TORAY IND INC), 2 March 1992,
- PATENT ABSTRACTS OF JAPAN vol. 011, no. 262 (C-442), 25 August 1987 & JP,A,62 062907 (KURARAY CO LTD), 19 March 1987,

## Description

This invention relates to methods and apparatus for making strand material.

In WO 95/06558 is disclosed a method for making strand material comprising drawing a laminar material having a first layer of drawable material and a second layer of elastically extensible material so that the first layer extends inelastically while the second layer extends elastically so that the drawn materials tends to curl into a coil strand configuration. Strands suitable for use as weaving, knitting and sewing threads may be made from e.g. a nylon or polyester tape coated with a polyurethane elastomer. A tape having a width of some 5mm with a pre-draw thickness of 12-14 microns, of which 2 microns will be the elastic layer, will draw down and curl into a filament - like form which is suitable for textile purposes.

The tendency to curl and remain curled is ascribed to a change in the relative widths of the substrate and elastic material after drawing, the elastic material having been reduced in width less than the substrate and so tending to an equilibrium position in which it lies on the outside of the curled formation.

WO 95/06558 describes two modes of coiling, namely a single spiral, in cross-section, and a "C" formation with each end of the "C" in the form of a tight spiral - this may be symmetric or asymmetric, with one coil being larger than the other.

The fact of the elastic coating layer being on the outside of the coil structure imposes some limitations on the choice of materials and also some limitations on the use to which the strand material may be put. It is desirable that, for regular textile usage, the strand - and thus the outer elastic material - have good abrasion resistance, be non-abrasive and be readily lubricated.

The outer layer is also thin and even though it may have good abrasion resistance, it is, on account of its thinness and its exposure, liable to being rubbed off together, of course, with any colour it carries.

The present invention provides novel methods for making strand material that does not suffer from these disadvantages, and which has other advantages over prior art strand materials, and apparatus for making such strand material.

The invention comprises a method for making a strand material comprising drawing and twisting a tape of drawable material, characterised in that the tape is twisted whilst being drawn.

The tape may be false twisted.

US-3 560 141 describes a method for tanning a collagen tape in which a false twist is inserted into the tape to form a rounded strand. US-3 646 747 describes false twisting a ribbon of filamentary material by false twisting in which the ribbon is longitudinally folded on itself from both sides and has embossed striations which give the appearance of a twist. Neither of these patents discloses the tape being twisted whilst being drawn.

The tape may be homogeneous throughout its cross-section. This is surprising and a marked departure from previous proposals, where it has been deemed necessary to have a bicomponent tape, and indeed one, for best results, in which one component (a substrate) is of drawable material and the other (a coating) is of elastically extensible or elastomeric material.

Of course, a strand material produced with such a homogeneous or single component tape will not be the same in all respects as one from a bicomponent tape. However, while it may lack the degree of coiling and the permanence of some biocomponent materials, it is a useful product for a number of different end-users, and can be processed to enhance its properties, as by heat setting, which will tend to render permanent, or more permanent, the spiral cross-section configuration.

While strand material can be produced by false twisting the tape while it is being drawn, the result being a coiled tape strand with no twist, it is also possible that real twisting can be used whether together with or instead of false twisting, especially perhaps when bicomponent tapes are used when the real twisting will serve to initiate the spiral formation. Real twisting can be effected in a draw twisting arrangement. Whilst the twisting, real or false, is best effected contemporaneously with drawing, it is not excluded that with some materials the twisting can be carried out on a fully-drawn tape or totally-oriented tape, the twisting effecting the coiling which might then need to be set into permanency as for example by heating.

When the tape is a bicomponent tape, comprising a substrate and a coating, the coating may, as already proposed, be an elastomeric or elastically stretchable material, but the tape may be formed with a spiral cross-section with the coating on the inside of the spiral instead of the outside as taught in WO 95/06558.

The coating may be of a heat sealable material. It need not be elastically extensible and may be inelastically extensible. It may be of a heat seal adhesive such as polyvinylacetate copolymer. Heat sealing will serve to increase or bring about permanence of the coiled configuration. Real twist may also contribute to permanence.

The coating may incorporate a dye which is transferred to the substrate, as by heating, the dye for such purposes possibly being a sublimable disperse dye and the strand material being heated to a temperature sufficient to sublime the dye.

The invention also comprises a method for making strand material in which a flat tape of drawable material is drawn and twisted to form a coiled tape.

False twisting may be effected by a friction false twist device, which may comprise a roller over which the tape runs with a non-trivial angle between the direction of travel of the tape and the direction of travel of the roller surface where the tape contacts it. The run of the tape may turn the roller, or the roller may be driven.

The effect of the twisting can be to produce the reversing spiral formation above-mentioned, though a monospiral and other configurations can also be produced.

The twisting initiates the coiling, though the width differential of a composite tape with an elastically extensible layer as aforementioned may operate to maintain the spiral formation against a tendency to relax over time. Because the width differential is no longer needed to initiate the coiling, it is possible to hot-draw the tape.

Among other advantages, the hot draw zone input roller can be used to dry a just-coated tape - the tape can be run elastomer side down on the hot roller.

As with WO 95/06558, the composite tape may be drawn to stabilise the drawable polymer within the elastic limit of the elastic material. The drawable polymer may have a natural draw ratio which is the smallest draw ratio at which it is stabilised but may be one that can be drawn substantially beyond its normal draw ratio, and doing this brings advantages in terms of strength and increased fineness.

The invention also comprises apparatus for processing a tape of a drawable polymer material comprising an arrangement for the supply of the tape, a drawing arrangement for the tape and a twisting arrangement for the tape, characterised in that the twisting arrangement is operative to initiate a rolling up action on the tape, as it is being drawn in the drawing arrangement.

The supply arrangement may comprise a support for a roll of tape.

The drawing arrangement may comprise input and output roller means.

The twisting arrangement may comprise a false twisting arrangement, which may be located in the drawing arrangement so that false twist runs back to a twist stop therein which may be situated at input roller means thereof.

The false twisting arrangement may comprise a friction false twisting arrangement, which may comprise a roller, which may be a flanged roller, over which the tape is guided to run with a non-trivial angle between the direction of travel of the tape and the direction of travel of the roller surface where the tape contacts it. The term "friction false twist device" is intended to encompass devices where there is relative sliding between the contacting surfaces as well as devices where the tape has a purely rolling motion over the roller surface. The roller may be free to be rotated by the tape as it runs over it, or it may be driven, which might give rise to a wider degree of control over the coiling operation.

Methods and embodiments of apparatus for making strand materials according to the invention will now be described with reference to the accompanying drawings, in which :
- Figure 1: is a cross-section through a first strand material,
- Figure 2: is a perspective view of second strand material with twist,
- Figure 3: is a cross-section through third strand material,
- Figure 4: is a diagrammatic illustration of a first embodiment of apparatus for strand production,
- Figure 5: is a diagrammatic illustration of a second embodiment of apparatus for strand product, and
- Figure 6: is a cross-section of a fourth strand material,
- Figure 7: is a cross-section of a fifth strand material,
- Figure 8: is a cross-section of a sixth strand material,
- Figure 9: is a cross-section of a further strand material,
- Figure 10: is a diagrammatic illustration of another apparatus for strand material production,
- Figure 11: is a front elevation of a friction false twist wheel, and
- Figure 12: is a side elevation of the wheel of Figure 11.

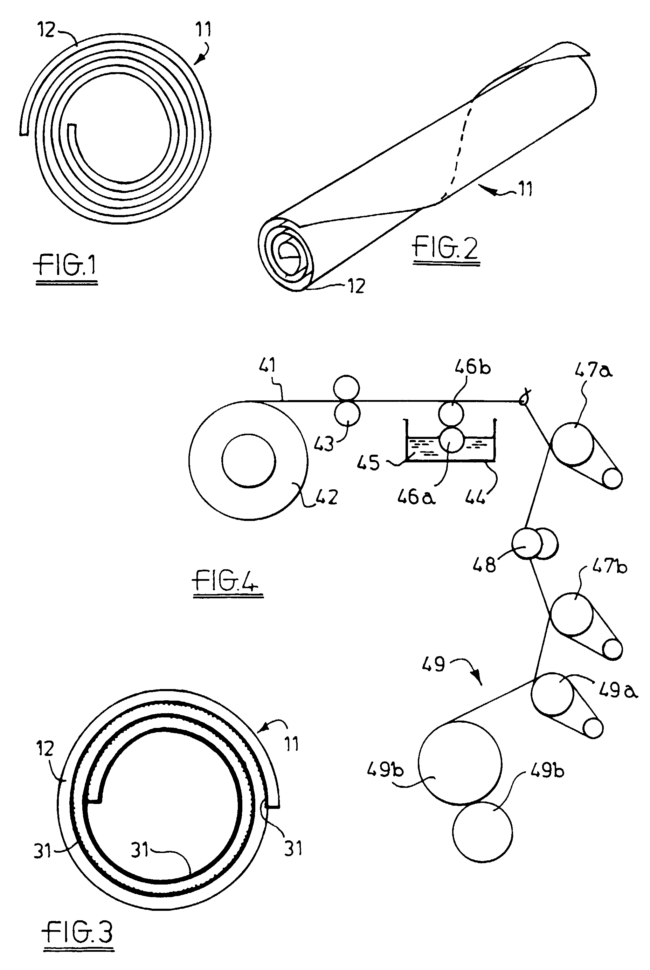

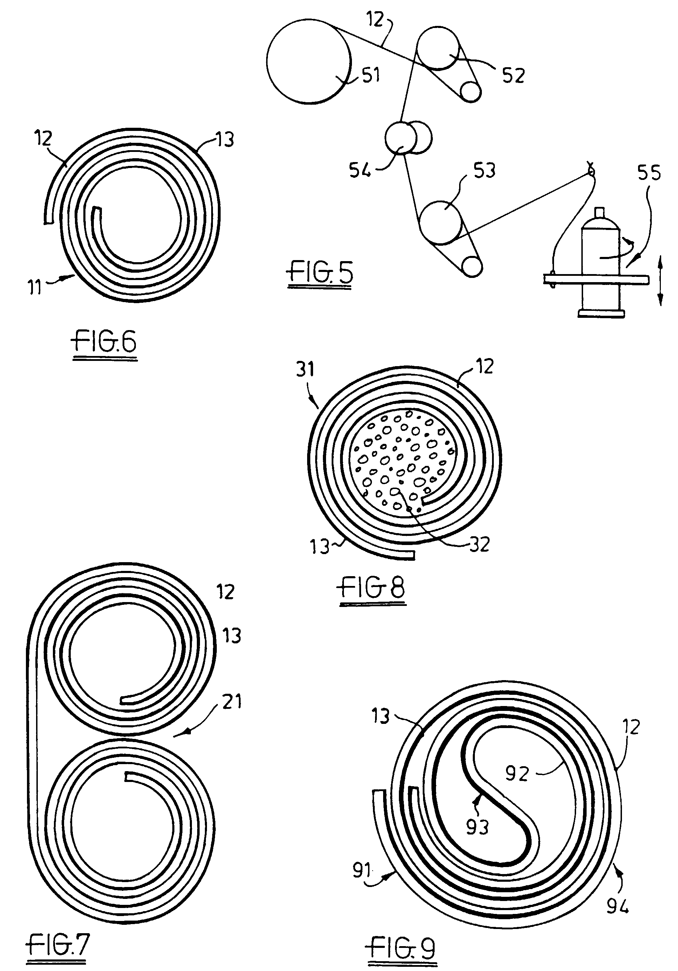

Figures 1 to 3 illustrate strand material 11 made by methods according to the invention comprising a drawn tape 12 which is or has been twisted.

The cross-section of the strand material in each case is spiral.

Figure 1 illustrates a strand material 11 made from a homogeneous, drawable tape which has been false twisted during the drawing step and which has, as a result, readily taken up the spiral cross-section form. It is possible to produce a similar structure even without false twisting, but the false twisting positively initiates the rolling-up action which may otherwise be uncertain.

As compared to strand materials produced according to WO 95/06558, the spiral configuration may have a lesser degree of permanence. This may not matter for some applications, or if a higher degree of permanence is required it may be brought about in some other fashion.

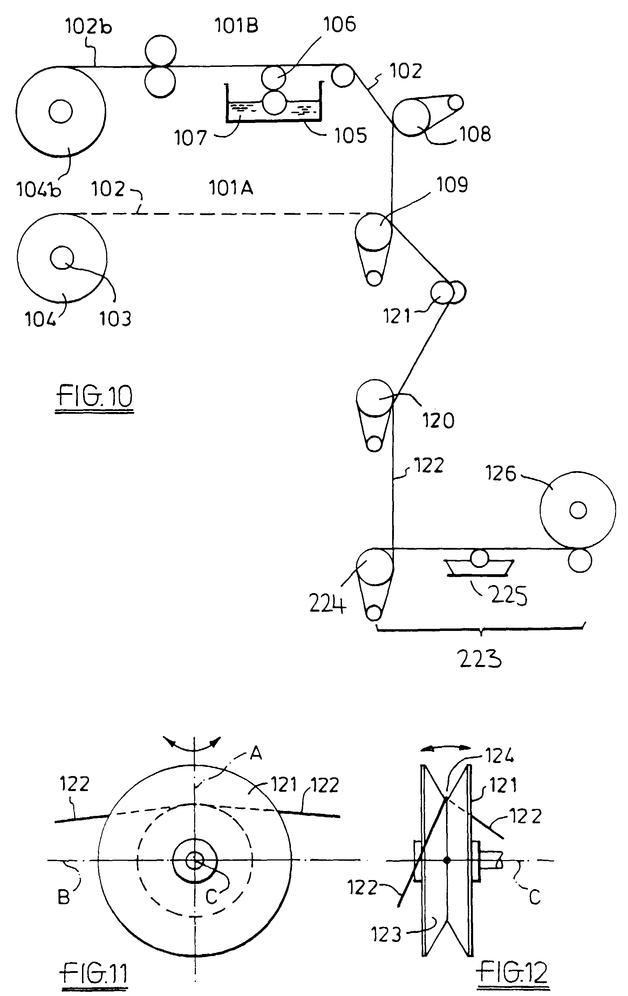

One such fashion could involve the insertion of a degree of real twist as illustrated in Figure 2. This could be achieved on a draw twisting machine such as it illustrated in Figure 5, which shows a supply 51 of undrawn tape 12 feeding to a first godet 52 then to a second godet 53 running faster than the first to draw the tape, which runs over a false twist device 54 to initiate the rolling-up action. The strand material for the second godet 53, which contains up to that point no real twist, is taken up on a ring spindle 55 which inserts real twist which runs back to the second godet 53. Either or both godets 52, 53 may be heated and a draw pin, which may be a hot draw pin, is optional in the draw zone defined by godets 52, 53. Even a strand produced by false twisting without any real twisting can, however, give the appearance of having real twist inasmuch as the false twist can give rise to a twist-like surface irregularity evidently due to alternating sections of slight S and Z twist.

Strand material 11 without real twist may be made on similar equipment except, of course, for the ring spindle 55, which would be replaced by a cross-winding arrangement.

Figure 3 illustrates another way of imparting permanence, or greater permanence, to the spiral cross-section formation. In this case, the undrawn tape has been coated with a sealing material such as a polyvinylacetate copolymer adhesive 31 which is. after drawing and rolling-up inside the tape substrate 12. The strand material only has to be heated to a suitable temperature for the adhesive to seal the coiled layers together.

Since the adhesive 31 is on the inside of the strand material 11, the outside of the strand is the material of the substrate which can be of any drawable polymeric material and which can, therefore, be selected to have properties appropriate to the end use intended for it such, for example, as abrasion resistance and dyeability - dyeing will not be precluded or hindered by the presence of an outer elastomeric layer as taught in WO 95/06558.

A novel method for colouring strand material may be practised with strand material as described with reference to Figure 3. Broadly, this method involves including within or on the strand material or within or on a component of it, a dye which can transfer with the body of the strand material.. Such a dye may be a sublimable disperse dye of the kind used in heat transfer printing and it may be transferred by heating to its sublimation point. However, acid and reactive dyes can be used, and, indeed, generally speaking, any dye can be used which is suitable for the material in question. In the strand material of Figure 3, the dye may be contained in the coating adhesive 31.

The material of Figure 3 may be made on apparatus as illustrated in Figure 4 in which a drawable tape 41 is fed from a supply reel 42 by forwarding up rollers 43 to an adhesive applicator device 44 in which adhesive 45 is picked up on a roller 46a and transferred to an applicator roller 45b in contact with which the tape 41 runs to godet 47a, then over false twist device 48 to godet 47b running faster than godet 47a to draw the tape, which is coiled by the drawing action as initiated by the false twist device 48, the thus formed strand passing to a cross wind-up arrangement 49 comprising a godet 49a and wind-up head 49b.

Processing is facilitated by heat and/or moisture. Moisture can be applied by a lick roller to one side of the tape prior to coiling. While heated rollers have generally been described in connection with applying heat to the tape, when flat the tape is amenable to heating on a hot plate.

It is found in some circumstances to be advantageous to separate the twist point from the draw point - slipping contact with a roller immediately before the false twist wheel localises the draw point at the roller and the false twist runs back along the tape as far as, but not beyond, the draw point. It may be found advantageous, for example, to confine the twist to the last third, say, of the draw zone.

As described with reference to Figure 5, the godets 47a, 48c or either of then can be heated and a draw pin, which may be heated, is optional and would be used according to normal practice with the polymer material being processed.

If the adhesive contains a sublimable dye as described above, it may be arranged that any one of the heated elements referred to is at a temperature which will sublime the dye, or a special heated element may be added to that apparatus. Heat sealing and sublimation may be effected by the same heated element or by different elements as may be devised.

The real twist, of course, may be inserted in the strand material of Figure 3 as by an arrangement illustrated in Figure 5.

Depending on the nature and the amount of the heat seal adhesive employed, the strand material may be somewhat stiff for some purposes, but this can be usually be rectified by a softening treatment appropriate to the materials concerned.

As with the process of WO 95/06558, fibres or filaments may also be incorporated in the strand material, and single spiral or double spiral formations may be produced as well as cross-sections in which the inner part spirals one way and the outer part spirals the opposite way, the two parts being joined by a diametral bar. The strand materials may be made with or without a particulate filler such as titanium dioxide or zinc oxide, but the methods described herein facilitate the production of strand material without any filler and which can, therefore, be used as a sewing thread which does not require to be dyed as, being translucent it will pick up the colour of the surrounding fabric.

Figures 6 to 9 illustrate strand materials that can be made using the apparatus illustrated in Figure 10 and the methods for using the same described herein.

Figure 6 illustrates a strand material 11 similar to one that can be produced according to WO 95/06558, but which can be produced more readily and with improved properties as compared to prior art materials including those of WO 95/06558. The material 11 in cross-section comprises a monospiral of a two component film material of which one component 12 is a substrate of a drawn film-forming synthetic polymer material and the other component 13 is a coating of an elastomer such as polyurethane.

The material is tightly coiled, with the elastomer 13 on the outside. The cross-section is greatly enlarged - the tape material from which it is produced is a few, say 5, millimetres wide, while the finished strand has a linear density of perhaps 200 decitex.

The strand material 21 of Figure 7 has a "C" shaped cross-section with strong tight spirals at the ends of the "C". Again, it is of a composite film material having a drawn polymer substrate 12 with an elastomer coating 13 thereon.

The material 31 of Figure 8 is like that of Figure 6 except for having additional spun filaments 32 contained within the spiral formation.

All ofthese materials, which resemble materials described in WO 95/06558, can be produced by the methods and apparatus which will be described with reference to Figure 10.

The strand material 91 illustrated in Figure 9 illustrates an increased flexibility of production that is achievable using the novel methods and apparatus described herein.

The material 91 is, as before, of a drawn polymer film substrate 12 with an elastic coating 13, but has in cross section an inner spiral 92 of which the elastic coating 13 is on the outside, and then a reversal, producing a diametral bar 93 and an outer spiral 94 of opposite hand to the inner spiral 92. Thus the substrate 12, which can be of polymer such as nylon-6, nylon-6,6 or polyester with good textile properties such as dyeability and abrasion resistance, appears now on the outer surface of the strand material.

WO 95/06558 discusses incorporating fillers into the components of the strand material, the fillers comprising solid particulate material such as TiO₂ or gas or liquid inclusions which can modify the properties of the material. The same fillers, can, of course, be included in the materials described herein. Thus TiO₂ can be included as optical brightener, or zinc oxide could be included, giving brighter colours in colouring than TiO₂. The strand material can have a shiny or a matt appearance, however, depending upon whether the elastic or the substrate layer is on the surface. A strand can, however, be produced which has no included material and which is translucent - such a strand, undyed, can be used as a sewing thread in coloured fabric where it will transmit the colour of the fabric - this will avoid the need to produce sewing threads of many different colours, although it might be preferred to produce threads in just a few colours which might more readily blend in with a similar but not exactly matching fabric.

Figure 10 illustrates the method and apparatus for producing threads as described with reference to Figures 1 to 9.

The apparatus comprises an arrangement 101 for the supply of a tape 102 - in fact, this Figure illustrates alternative such supplies A and B. Supply A is simply a support 103 for a roll 104 of bicomponent tape 102. Supply B is a coating arrangement in which a nylon, polyester or like film material substrate 102b is supplied from a roll 104b to a coating arrangement 105 at which an aqueous suspension of a polyurethane, for example, is applied by a roller 106 from a bath 107 to form a bicomponent tape 102.

The tape 102 is supplied, elastic coating side up, a hot godet 108 to dry the coating, then coating side down, to an input feed roller arrangement 109 of a drawing arrangement which includes also an output roller arrangement 120 running at a higher surface speed than the arrangement 109. The input arrangement 109 is heated.

Between the input and output roller arrangements the tape passes over a flanged, free-running roller 111 arranged at such an angle that the tape receives a false twist that runs back to the input roller arrangement 108. The tape may need to be pretwisted by hand at start-up before being applied on to the roller 111. The coiled tape strand material 112 is wound up in a take-up arrangement 113, which comprises a godet 114 which together with the output godet 110 may be hot or cold, a lubrication applicator 115 and a wind-up bobbin 116.

The roller 111 could of course, be driven in rotation.

The idea is that the coiled up tape 102 rolls on or is perhaps slidingly rotated by contact with the roller 111 so that a false twist is generated. Depending on the position and skewedness of the roller 111 in relation to the path of the strand between the input and output roller arrangements, one or other of the strands illustrated in Figures 6 to 9 will be produced. The strand of Figure 7 would normally be produced without the use of the roller 111 or with it set square-on rather than skewed. The addition of a drive for the roller 111 instead of allowing it to rotate under the drag of the running strand may give better control to the extent that the disposition of the diametral bar 93 in relation to the inner and outer spirals of the strand material 91 of Figure 9 could be predetermined with accuracy.

Figure 11 and 12 illustrate a friction false twist wheel 121 suitable for false twisting tape in the methods and apparatus described with reference to Figures 1 to 10. The wheel 121 (48 in Figure 4, 54 in Figure 5, 61 in Figure 10) simply comprises a V-groove pulley type wheel made of a material such as polyurethane or rubber or at least having a surface of such material with which the material of the tape will have a suitable coefficient of friction. The tape (referenced 122 in these figures) is run in contact with a part of one conical face 123 of the V-groove 124. The wheel 121 is mounted conveniently for adjustment about two axes A, B orthogonal to each other and to the axis of rotation C of the wheel 121. It is perfectly satisfactory to let the wheel 121 rotate freely about axis C, but it could be driven, and this could give an extra element of control.

The required level of false twist is by no means as high as that which is required for false twist texturing multifilament yams. A level of a few turns per centimetre is sufficient to exert the necessary control over the way the tape collapses into a spiral cross-section spill-like tube or rod.

Yarns produced by the methods and apparatus described and having the characteristics as described with reference to the various drawings depicting embodiments of the yarns have advantages over conventionally - produced threads.

For drape, whether of a textile fabric or a sewn seam in a textile fabric, the yarns are required to flex in a direction normal to the plane of the fabric, i.e. about an axis lying in the fabric at the point of flexure. The yarns described herein are relatively easily flattened locally, and such local flattening will enhance drapeability. If the yarn is used as a sewing thread, which is a primary interest of Applicant, flattening is brought about by pressure against the sewing needle at the high tension point of the sewing cycle. Sewn thread would be flattened so that its major cross-sectional axis lay in the plane of the fabric, thereby enhancing seam flexibility normal to the fabric. The thread would, however, be stiffer against bending in the plane of the fabric, and this would enhance the ability of the seam to remain straight.

Since the thread does not need to have any or any substantial degree of twist, it is suitable for multi-directional sewing and in particular for embroidery - in fact it has advantages over conventional twisted threads in this regard as it does not change its appearance on changing seam direction. On this account, also, it is advantageous in sewing tightly-woven fabrics such as air-bag fabrics, in which sewing using conventional twisted sewing thread is problematical.

Weaving would not ordinarily produce the requisite local forces to bring about flattening, but warp and weft crowns in a weave could be flattened by calendering, particularly with heat setting, and this would enhance drape while stiffening the fabric against distortion within the woven structure. In addition, weave interstices would be reduced, increasing the effective cover factor of the weaving yarns. With substantial reduction of weave interstices, filter fabrics and even wind-break fabrics could be produced.

Although not inherently as flexible as multifilament yarns normally used for knitting, weaving and sewing, the flexibility of the yarns according to the invention can be improved by moisture - storing the yarns in a moisture-controlled environment prior to use, or simply wetting them, will improve flexibility for sewing, weaving and knitting. Reducing the moisture content after fabrication will improve resistance to fabric distortion.

As sewing threads yarn produced according to the invention has improved abrasion resistance over multifilament sewing threads, the filaments of which break rapidly and progressively while the yarns of the invention remain unscathed under like treatment. This improved abrasion resistance will be of substantial benefit in connection with the manufacture of footwear, where normal sewing threads have to be used only in locations on the footwear where they are shielded from the possibility of abrasion.

The properties of yarns according to the invention are, when used as sewing threads, comparable with those of equivalent linear density bonded nylon sewing threads. Tenacity is approximately 15% lower than that of bonded nylon, but, strangely, seam tenacity is some 15% higher, in threads tested to date.

## Claims

1. A method for making a strand material comprising drawing and twisting a tape of drawable material, characterised in that the tape is twisted whilst being drawn.

2. A method according to claim 1, in which the tape is false twisted.

3. A method according to claim 2, in which the tape is real twisted after the false twisting and drawing step.

4. A method according to any one of claims 1 to 3, in which the tape is homogeneous through its cross-section.

5. A method according to any one of claims 1 to 3, in which the tape comprises a substrate and a coating.

6. A method according to claim 5, in which the coating is of an elastomeric or elastically stretchable material and is formed into a spiral cross-section with the coating on the inside of the spirals.

7. A method according to claim 5, in which the coating is of a heat sealable material.

8. A method according to claim 5 and claim 6, in which the coating is not elastically extensible.

9. A method according to claim 8, in which the coating is inelastically extensible.

10. A method according to claim 7, in which the strand material is set by heat sealing the material of the coating.

11. A method according to claim 5 and claim 7, in which the coating is of a heat seal adhesive.

12. A method according to claim 11, in which the heat seal adhesive comprises polyvinylacetate copolymer.

13. A method according to any one claims 4 to 12, in which the coating incorporates a dye which is transferred to the substrate.

14. A method according to claim 13, in which the dye is transferred by heating.

15. A method according to claim 14, in which the dye is a sublimable disperse dye and the strand material is heated to a temperature sufficient to sublime the dye.

16. Apparatus for processing a tape of a drawable polymer material comprising an arrangement for the supply of the tape, a drawing arrangement for the tape and a twisting arrangement for the tape characterised in that the twisting arrangement is operative to initiate a rolling up action on the tape, as it is being drawn in the drawing arrangement.

17. Apparatus according to claim 16, in which the supply arrangement comprises a support for a roll of tape.

18. Apparatus according to claim 16 or claim 17, in which the drawing arrangement comprises input and output roller means.

19. Apparatus according to claim 18, in which the input roller means are heated.

20. Apparatus according to any one of claims 16 to 19, in which the twisting arrangement comprises a false twisting arrangement.

21. Apparatus according to claim 20, in which the false twisting arrangement is located in the drawing arrangement so that false twist runs back to input roller means thereof.

22. Apparatus according to claim 20 or claim 21, in which the false twisting arrangement comprises a friction false twist arrangement.

23. Apparatus according to claim 22, in which the friction false twisting arrangement comprises a roller over which the tape is guided to run with a non-trivial angle between the direction of travel of the tape and the direction of travel of the roller surface where the tape contacts it.

24. Apparatus according to claim 23, in which the roller is free to be rotated by the tape as it runs over it.

25. Apparatus according to claim 24, in which the roller is driven.

26. A method of processing strand material produced according to any one of claims 1 to 15, by knitting, weaving, sewing, texturing or any other process in which the material is subject to flexure in which the material is softened by heat and/or moisture during such processing to increase its flexibility.

## Patentansprüche

1. Verfahren zum Herstellen eines Litzenmaterials, welches das Ziehen und Verdrehen eines Bandes aus ziehbarem Material aufweist,
**dadurch gekennzeichnet,**
daß das Band verdreht wird, während es gezogen wird.

2. Verfahren nach Anspruch 1, bei welchem das Band falsch verdreht wird.

3. Verfahren nach Anspruch 2, bei welchem das Band nach dem falschen Verdrehen und dem Ziehschritt tatsächlich verdreht wird.

4. Verfahren nach einem der Ansprüche 1 bis 3, bei welchem das Band über seinen Querschnitt homogen ist.

5. Verfahren nach einem der Ansprüche 1 bis 3, bei welchem das Band ein Substrat und eine Beschichtung aufweist.

6. Verfahren nach Anspruch 5, bei welchem die Beschichtung aus einem elastomerischen oder elastisch streckbaren Material ist und in einen spiralförmigen Querschnitt mit der Beschichtung auf der Innenseite der Spiralen geformt wird.

7. Verfahren nach Anspruch 5, bei welchem die Beschichtung aus einem heiß versiegelten Material ist.

8. Verfahren nach Anspruch 5 und Anspruch 6, bei welchem die Beschichtung nicht elastisch dehnbar ist.

9. Verfahren nach Anspruch 6, bei welchem die Beschichtung unelastisch dehnbar ist.

10. Verfahren nach Anspruch 7, bei welchem das Litzenmaterial gefestigt wird durch die Wärmeversiegelung des Materials der Beschichtung.

11. Verfahren nach Anspruch 5 und Anspruch 7, bei welchem die Beschichtung aus einem wärmeversiegelbaren Klebstoff ist.

12. Verfahren nach Anspruch 11, bei welchem der wärmeversiegelbare Klebstoff ein Polyvinylacetat-Copolymer aufweist.

13. Verfahren nach einem der Ansprüche 4 bis 12, bei welchem in die Beschichtung ein Farbstoff eingearbeitet ist, welcher auf das Substrat übertragen wird.

14. Verfahren nach Anspruch 13, bei welchem der Farbstoff durch Erwärmen übertragen wird.

15. Verfahren nach Anspruch 14, bei welchem der Farbstoff ein sublimierbarer Dispersionsfarbstoff ist und das Litzenmaterial auf eine Temperatur erwärmt wird, die ausreicht, um den Farbstoff zu sublimieren.

16. Vorrichtung zum Verarbeiten eines Bandes aus einem ziehbaren Polymermaterial, welche aufweist: eine Anordnung für die Zuführung des Bandes, eine Ziehanordnung für das Band und eine Verdrehanordnung für das Band, dadurch gekennzeichnet, daß die Verdrehanordnung wirksam ist, um einen Aufrollvorgang an dem Band zu initiieren, während es in der Ziehanordnung gezogen wird.

17. Vorrichtung nach Anspruch 16, bei welcher die Zuführungsanordnung eine Halterung für eine Bandrolle aufweist.

18. Vorrichtung nach Anspruch 16 oder Anspruch 17, bei welcher die Ziehanordnung eine Eingangs- und eine Ausgangsrollenvorrichtung aufweist.

19. Vorrichtung nach Anspruch 18, bei welcher die Eingangsrollenvorrichtung erwärmt ist.

20. Vorrichtung nach einem der Ansprüche 16 bis 19, bei welchem die Verdrehanordnung eine Falschverdrehanordnung aufweist.

21. Vorrichtung nach Anspruch 20, bei welcher die Falschverdrehanordnung sich so in der Ziehanordnung befindet, daß eine falsche Verdrehung zu der Eingangsrollenvorrichtung hiervon zurückläuft.

22. Vorrichtung nach Anspruch 20 oder Anspruch 21, bei welcher die Falschverdrehanordnung eine Reibungs-Falschverdrehanordnung aufweist.

23. Vorrichtung nach Anspruch 22, bei welcher die Reibungs-Falschverdrehanordnung eine Rolle aufweist, über welche das Band geführt ist, um mit einem nicht unbedeutenden Winkel zwischen der Richtung der Bewegung des Bandes und der Richtung der Bewegung der Rollenoberfläche an der Stelle, an der das Band sie berührt, zu laufen.

24. Vorrichtung nach Anspruch 23, bei welcher die Rolle durch das Band frei drehbar ist, wenn es über sie läuft.

25. Vorrichtung nach Anspruch 24, bei welcher die Rolle angetrieben ist.

26. Verfahren zum Verarbeiten von Litzenmaterial, das nach einem der Ansprüche 1 bis 15 hergestellt ist, durch Stricken, Weben, Nähen, Texturieren oder irgendeinen anderen Vorgang, bei welchem das Material einer Biegung unterzogen wird, bei welcher das Material durch Wärme und/oder Feuchtigkeit während einer derartigen Verarbeitung erweicht wird, um seine Biegsamkeit zu erhöhen.

## Revendications

1. Procédé de fabrication d'un matériau de toron, comprenant l'étirage et le retordage d'un ruban d'un matériau étirable, caractérisé en ce que le ruban est retordu pendant qu'il est étiré.

2. Procédé selon la revendication 1, dans lequel le ruban subit une fausse torsion.

3. Procédé selon la revendication 2, dans lequel le ruban subit une vraie torsion après l'étape de fausse torsion et l'étirage.

4. Procédé selon l'une quelconque des revendications 1 à 3, dans lequel le ruban est homogène dans sa section.

5. Procédé selon l'une quelconque des revendications 1 à 3, dans lequel le ruban comporte un substrat et un revêtement.

6. Procédé selon la revendication 5, dans lequel le revêtement est un matériau élastomère ou élastiquement extensible et est mis à une section en spirale, le revêtement se trouvant à l'intérieur des spires.

7. Procédé selon la revendication 5, dans lequel le revêtement est formé d'un matériau thermosoudable.

8. Procédé selon la revendication 5 et 6, dans lequel le revêtement n'est pas élastiquement extensible.

9. Procédé selon la revendication 8, dans lequel le revêtement est extensible sans élasticité.

10. Procédé selon la revendication 7, dans lequel le matériau de toron est fixé par thermosoudage du matériau du revêtement.

11. Procédé selon la revendication 5 et 7, dans lequel le revêtement est un adhésif thermosoudable.

12. Procédé selon la revendication 11, dans lequel l'adhésif thermosoudable est un copolymère d'acétate de polyvinyle.

13. Procédé selon l'une quelconque des revendications 4 à 12, dans lequel le revêtement comprend un colorant qui est transféré au substrat.

14. Procédé selon la revendication 13, dans lequel le colorant est transféré par chauffage.

15. Procédé selon la revendication 14, dans lequel le colorant est un colorant dispersé sublimable, et le matériau du brin est chauffé à une température qui suffit pour la sublimation du colorant.

16. Appareil de traitement d'un ruban d'un matériau polymère étirable comprenant un ensemble de transmission du ruban, un ensemble d'étirage du ruban et un ensemble de retordage du ruban, caractérisé en ce que l'ensemble de retordage est destiné à provoquer une action d'enroulement sur le ruban lorsqu'il est étiré dans l'ensemble d'étirage.

17. Appareil selon la revendication 16, dans lequel l'ensemble de transmission comprend un support d'un rouleau de ruban.

18. Appareil selon la revendication 16 ou 17, dans lequel l'ensemble d'étirage comprend des dispositifs à rouleau d'entrée et de sortie.

19. Appareil selon la revendication 18, dans lequel le dispositif à rouleau d'entrée est chauffé.

20. Appareil selon l'une quelconque des revendications 16 à 19, dans lequel l'ensemble de retordage comprend un ensemble de fausse torsion.

21. Appareil selon la revendication 20, dans lequel l'ensemble de fausse torsion est placé dans l'ensemble d'étirage de manière que la fausse torsion revienne vers son dispositif à rouleau d'entrée.

22. Appareil selon la revendication 20 ou 21, dans lequel l'ensemble de fausse torsion comporte un ensemble de fausse torsion à friction.

23. Appareil selon la revendication 22, dans lequel l'ensemble de fausse torsion à friction comprend un rouleau sur lequel le ruban est guidé afin qu'il se déplace avec un angle non négligeable entre la direction de déplacement du ruban et la direction de déplacement de la surface du rouleau à l'endroit où le ruban est à son contact.

24. Appareil selon la revendication 23, dans lequel le rouleau est libre de tourner sous l'action du ruban lorsque celui-ci se déplace sur lui.

25. Appareil selon la revendication 24, dans lequel le rouleau est mené.

26. Procédé de traitement d'un matériau de toron produit selon l'une quelconque des revendications 1 à 15, par tricotage, tissage, couture, texturation ou tout autre traitement, dans lequel le matériau est soumis à une flexion au cours de laquelle le matériau est ramolli par chauffage et/ou de l'humidité pendant le traitement afin que sa flexibilité soit accrue.
